# EUROPÄISCHE PATENTSCHRIFT

(11) **EP 0 532 949 B1**
(45) Veröffentlichungstag und Bekanntmachung des Hinweises auf die Patenterteilung: **19.04.1995**
(21) Anmeldenummer: 92114588.4
(22) Anmeldetag: 27.08.1992
(51) Int. Cl.: B65H 3/32, B65H 59/02, B65G 61/00, B65G 59/02

(54) **Vorrichtung zum Entstapeln von blockweise auf Paletten gestapelten Zuschnitten**
Device for unpiling sheets piled in block-form on pallets
Dispositif pour le désempilage de feuilles empilées en blocs sur des palettes

(30) Priorität: 20.09.1991 DE 9111787 U
(43) Veröffentlichungstag der Anmeldung: 24.03.1993
(73) Patentinhaber: Niepmann Traylift Transportsysteme GmbH & Co. KG, D-58285 Gevelsberg (DE)
(72) Erfinder: Brinker, Alfred, Dr., W-5820 Gevelsberg (DE)

(56) Entgegenhaltungen:
- EP-A- 0 363 722

## Beschreibung

Die Erfindung betrifft eine Vorrichtung zum Entstapeln von blockweise unter Einfügen von Zwischenlagen auf Paletten gestapelten Zuschnitten aus Papier, Pappe, Karton, Kunststoff oder dergleichen durch einen räumlich gesteuert verfahrbaren Greifkopf, an dem ein etwa waagerecht ausgerichtetes Einstechwerkzeug angeordnet ist, das durch eine waagerechte Bewegung des Greifkopfes den jeweils zu entnehmenden Zuschnittblock untergreift, durch eine anschließende Bewegung des Greifkopfes in senkrechter und/oder waagerechter Richtung von der jeweiligen, die gesamte Fläche der Palette überdeckenden Zwischenlege entfernt und einer Weiterverarbeitung zuführt.

Derartige Vorrichtungen zum Entstapeln von blockweise auf Paletten gestapelten Zuschnitten sind aus der EP-A-0 363 722 bekannt. Bei diesen Vorrichtungen ist das Einstechwerkzeug um eine waagerechte Achse geringfügig verschwenkbar am Greifkopf gelagert. Die Verschwenkbewegung des Einstechwerkzeuges wird durch einen Schalthebel überwacht, der mittels eines Schalters die Absenkbewegung des Greifkopfes unterbricht, sobald das Einstechwerkzeug entgegen einer einstellbaren Federkraft um einen vorgebbaren Winkel verschwenkt worden ist.

Diese bekannten Vorrichtungen arbeiten in der Praxis solange zufriedenstellend, wie die Zwischenlagen über die gesamte Fläche der Palette gesehen für sämtliche Zuschnittblöcke eine Ebene bilden. Sofern eine Zwischenlage größere Höhenunterschiede bzw. Schrägstellungen der Auflageflächen für die einzelnen Zuschnittblöcke aufweist, entsteht bei der bekannten Vorrichtung entweder die Gefahr, daß die Vorderkante des Einstechwerkzeuges in die Zwischenlage einsticht, was zu Funktionsstörungen führt, oder daß die untersten Zuschnitte des jeweils zu entfernenden Zuschnittblockes nicht erfaßt werden und auf der Zwischenlage verbleiben. Da nach dem Entfernen sämtlicher Zuschnittblöcke von einer Zwischenlage auch diese Zwischenlage für das weitere Entstapeln der Palette entfernt werden muß, können durch die liegengebliebenen Zuschnitte Funktionsstörungen beim Entfernen der Zwischenlage auftreten.

Die voranstehend erwähnten Abweichungen einer Zwischenlage von einer Ebene können durch mehrere Gegebenheiten verursacht werden. So werden beispielsweise die Zuschnittblöcke beim Stanzen in den Druckereien auf hauseigenen Paletten abgelegt, wobei sich die Anordnung auf diesen hauseigenen Paletten aus der Bogengröße und dem optimalen Zuschnitt-Nutzen ergibt, der mit minimalem Papierabfall von einer gegebenen Bogengröße erfolgt. Nach dem Stanzen werden die Zuschnittblöcke dann auf Euro- oder Industrie-Paletten mit Zwischenlagen umgeschichtet, wobei die Zwischenlagen dazu dienen, die Zuschnittblöcke beim Transport zu stabilisieren. Sowohl bei dieser Umschichtung als auch bei der Entnahme von Stichproben, beim Transport und im Lager kann es passieren, daß die Stapel ihre gerade Ausrichtung verlieren. Hinzu kommt, daS die Zuschnitte durch einseitige Lackierung oder Feuchtigkeitsaufnahme nicht immer flachliegen, sondern sich wölben.

Insgesamt führt dies dazu, daS die einzelnen Zwischenlagen in Wellen oder Stufen verformt sind. Hierbei kann es durch Ungenauigkeiten oder Beschädigungen der Paletten auch passieren, daß eine Ecke oder Kante einer Zwischenlage höherliegt als die gegenüberliegende Ecke oder Kante.

Wenn Paletten mit derart verformten Zwischenlagen mit den bekannten Vorrichtungen entstapelt werden sollen, verursachen diese Ungenauigkeiten die eingangs erwähnten Störungen. Um dieses Problem zu lösen, sind zwar bereits Systeme mit Sonderpaletten und Zwischenlagen vorgeschlagen worden, in welchen die Zuschnittblöcke auf mechanische Weise in präzisem Verhältnis zueinander gehalten werden. Außerdem ist es möglich, die Zuschnittblöcke mit Banderolen zu versehen, um deren Entstapeln auch bei den voranstehend beschriebenen Ungenauigkeiten zu ermöglichen. Diese Systeme sind jedoch kompliziert und kostenaufwendig.

Der Erfindung liegt die **Aufgabe** zugrunde, eine Vorrichtung der eingangs beschriebenen Art zum Entstapeln von blockweise auf Paletten gestapelten Zuschnitten derart weiterzubilden, daß sie auch bei Paletten eingesetzt werden kann, deren als Auflagefläche für die einzelnen Zuschnittblöcke dienende Zwischenlagen in erheblichem Maße von einer Ebene abweichen.

Die **Lösung** dieser Aufgabenstellung durch die Erfindung ist dadurch gekennzeichnet, daS am Greifkopf mindestens ein durch die Absenkbewegung des Greifkopfes auf die Zwischenlage absenkbarer Niederhalter angeordnet ist, dessen Druckfläche in der Arbeitsstellung unterhalb der Einstechkante des Einstechwerkzeuges liegt, das gegenüber dem Niederhalter in waagerechter Richtung verschiebbar ist.

Durch diese erfindungsgemäße Weiterbildung der bekannten Vorrichtung zum Entstapeln von blockweise auf Paletten gestapelten Zuschnitten ergibt sich der Vorteil, daS der Niederhalter die Zwischenlage gezielt nach unten wegdrückt, wenn die Einstechkante des Einstechwerkzeuges an den jeweils zu entfernenden Zuschnittblock angesetzt werden soll. Hierdurch wird sichergestellt, daß die Einstechkante des Einstechwerkzeuges zuverlässig zwischen dem niedergedrückten Teil der Zwischenlage und den untersten Zuschnitt des zu entfernenden Zuschnittblockes eindringt, wenn anschließend das Einstechwerkzeug in waagerechter Richtung gegenüber dem Niederhalter unter den Zuschnittblock verfahren wird. Auch bei stark deformierten Zwischenlagen wird auf diese Weise ein sicheres und zuverlässiges Entstapeln der einzelnen Zuschnittblöcke gewährleistet, und zwar ohne daß Beschädigungen an den Zwischenlagen oder Zuschnitten auftreten können.

Bei einer bevorzugten Weiterbildung der Erfindung sind zwei Niederhalter seitlich neben einem zungenförmigen Einstechwerkzeug angeordnet. Alternativ hierzu ist es möglich, nur einen Niederhalter zwischen den beiden Zinken eines gabelförmigen Einstechwerkzeuges anzuordnen.

Auf der Zeichnung sind ein Ausführungsbeispiel der erfindungsgemäßen Vorrichtung und eine mit dieser Vorrichtung zu entstapelnde Palette dargestellt, und zwar zeigen:
- Fig. 1: eine perspektivische Darstellung einer üblichen, mit Zuschnittblöcken beladenen Palette,
- Fig. 2: eine ebenfalls perspektivische Darstellung einer Vorrichtung zum Entstapeln der blockweise und jeweils auf einer Zwischenlage gestapelten Zuschnitte und
- Fig. 3: einen senkrechten Teilschnitt durch übereinanderliegende Zuschnittblöcke beim Ansetzen des Einstechwerkzeuges.

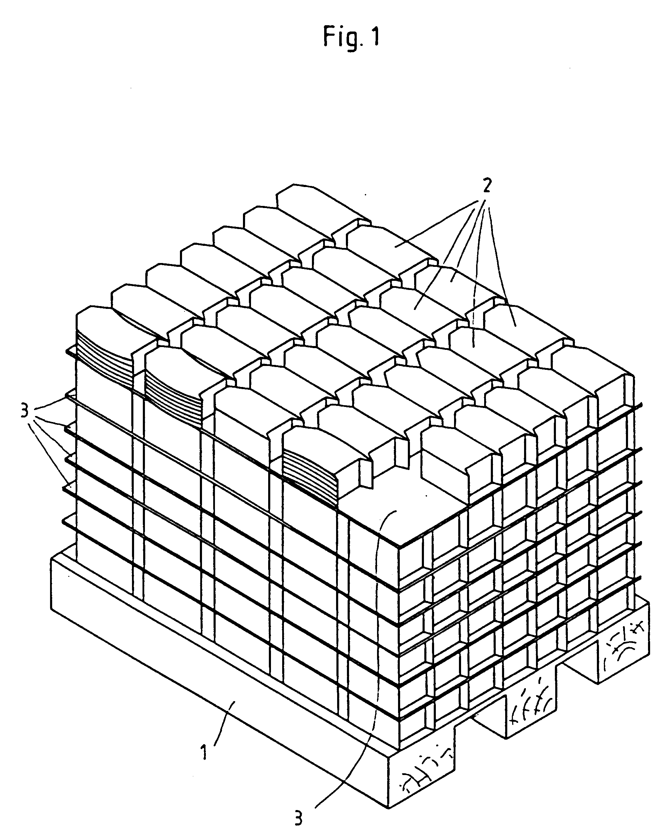

In Fig. 1 ist eine Palette 1 zu erkennen, auf der eine Mehrzahl von Zuschnittblöcken 2 gestapelt ist, wobei die übereinanderliegenden Zuschnittblöcke 2 jeweils durch eine Zwischenlage 3 getrennt sind, welche die gesamte Fläche der Palette 1 überdeckt.

Durch einseitige Lackierung, unterschiedliche Feuchtigkeitsaufnahme und ähnliche Einflüsse kann es dazu kommen, daß die durch einzelne Zuschnitte gebildeten Zuschnittblöcke 2 nicht flach, sondern entweder nach unten oder oben gewölbt auf den Zwischenlagen 3 liegen. In Fig. 1 sind derartige konkave bzw. konvexe Wölbungen einiger Zuschnittblöcke 2 angedeutet, wobei im Normalfall bei einer Palette nicht gleichzeitig konkave und konvexe Wölbungen auftreten. Auch durch andere Einflüsse, beispielsweise Entnahme einzelner Zuschnitte, Prägungen in den Zuschnitten oder schräge Ausrichtung einzelner Zuschnittblöcke 2 treten Höhendifferenzen zwischen benachbarten Zuschnittblöcken 2 auf, die insgesamt dazu führen, daS die einzelnen Zwischenlagen 3 sich nicht in einer Ebene befinden. Die als Auflagefläche für eine Mehrzahl von Zuschnittblöcken 2 dienenden Zwischenlagen 3 sind statt dessen in Wellen oder Stufen verformt, wobei es zusätzlich vorkommen kann, daß eine Ecke oder Kante einer Zwischenlage 3 höherliegt als die gegenüberliegende Ecke oder Kante. Dies kann auch durch Ungenauigkeiten oder Beschädigungen an den Paletten 1 verursacht sein.

Diese Höhenunterschiede im Bereich der Fläche einer einzigen Zwischenlage 3 und damit hinsichtlich des jeweils untersten Zuschnittes benachbarter Zuschnittblöcke 2 verursachen die Gefahr, daS das Einstechwerkzeug einer Vorrichtung zum Entstapeln der Palette 1 entweder in das Material der Zwischenlage 3 einsticht oder die jeweils untersten Zuschnitte eines Zuschnittblockes 2 durch zu hohes Einstechen des Einstechwerkzeuges in den Zuschnittblock 2 nicht erfaßt und damit auf der Zwischenlage 3 liegenläßt. Diese liegengebliebenen Zuschnitte können zu einer Störung des weiteren Entstapelvorganges führen, beispielsweise dadurch, daß die Zuschnitte anstelle der Zwischenlage 3 durch einen Sauggreifer erfaßt werden, der an sich zur Abnahme der von Zuschnittblöcken 2 befreiten Zwischenlage 3 dient.

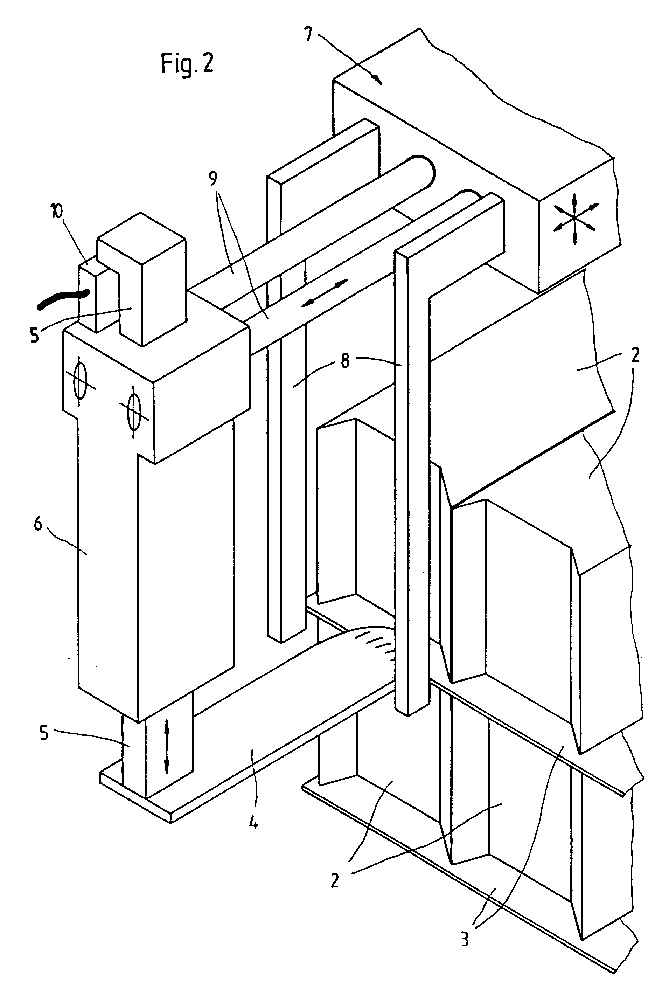

Um diese Komplikationen und ggf. auch Beschädigungen an den Zuschnitten zu vermeiden, ist gemäß Fig. 2 das beim Ausführungsbeispiel als plattenartige Einstechzunge ausgebildete Einstechwerkzeug 4 starr an einem Führungselement 5 angeordnet, das in senkrechter Richtung verschiebbar in einem Gehäuse 6 eines Greifkopfes 7 gelagert ist, der im übrigen auf der Zeichnung nicht dargestellt ist. Dieser Greifkopf 7 wird räumlich gesteuert verfahren und hierbei jeweils derart an eine ausgewählte Seite der zu entstapelnden Zuschnittblöcke 2 angesetzt, daß das Einstechwerkzeug 4 zwischen Zwischenlage 3 und unterstem Zuschnitt des jeweiligen Zuschnittblockes 2 eindringt, so daß dieser Zuschnittblock 2 anschließend durch eine Bewegung des Greifkopfes 7 in senkrechter und/oder waagerechter Richtung von der jeweiligen Zwischenlage 3 entfernt und einer Weiterverarbeitung zugeführt werden kann.

Wie aus Fig. 2 hervorgeht, ist am Greifkopf 7 mindestens ein durch die Absenkbewegung des Greifkopfes 7 auf die Zwischenlage 3 absenkbarer Niederhalter 8 angeordnet, dessen Druckfläche in der Arbeitsstellung unterhalb der Einstechkante des Einstechwerkzeuges 4 liegt. Das Einstechwerkzeug 4 ist gegenüber dem Niederhalter 8 in waagerechter Richtung verschiebbar, wie der Doppelpfeil an einer der beiden Führungsstangen 9 andeutet, über die das Gehäuse 6 mit dem Greifkopf 7 verbunden ist.

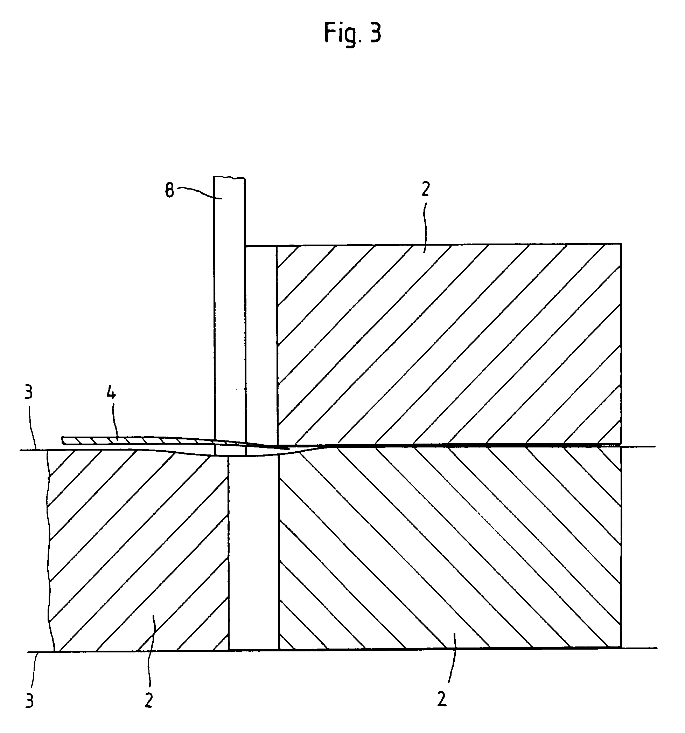

Beim Entfernen von in der jeweils ersten Reihe befindlichen Zuschnittblöcken 2 sind die in Fig. 2 erkennbaren Niederhalter 8 ohne Funktion, da hier die voranstehend beschriebenen Nachteile nicht auftreten können. Die Niederhalter 8 treten jedoch in Funktion, wenn Zuschnittblöcke 2 aus den nachfolgenden Reihen entnommen werden. In diesen Fällen treffen beim Ansetzen des Einstechwerkzeuges 4 an den jeweils zu entfernenden Zuschnittblock 2 als erstes die Niederhalter 8 von oben her auf die Zwischenlage 3, wie dies in Fig. 3 angedeutet ist. Beim Ausführungsbeispiel nach den Fig. 2 und 3 sind zwei derartige Niederhalter 8 seitlich neben dem Einstechwerkzeug 4 angeordnet, das in der Art einer Zunge ausgebildet ist. Wie die Darstellung in Fig. 3 erkennen läßt, wird durch dieses Auftreffen der Druckflächen der Niederhalter 8 die Zwischenlage 3 gezielt nach unten gedrückt. Da die Druckfläche der Niederhalter 8 in der Arbeitsstellung unterhalb der Einstechkante des Einstechwerkzeuges 4 liegt, wie deutlich die Fig. 3 zeigt, schiebt sich das Einstechwerkzeug 4 bei der anschließenden waagerechten Einstechbewegung zuverlässig zwischen Zwischenlage 3 und den untersten Zuschnitt des Zuschnittblockes 2, ohne daß die Gefahr einer Beschädigung entweder der Zwischenlage 3 oder der Zuschnitte besteht. Der jeweils zu entstapelnde Zuschnittblock 2 wird somit zuverlässig erfaßt und abgehoben.

Wie außerdem aus Fig. 2 hervorgeht, kommt der vordere Teil des Einstechwerkzeuges 4 bei einer Absenkbewegung des Greifkopfes 7 zur Auflage auf der Zwischenlage 3. Eine weitere Absenkbewegung hat anschließend eine Relativbewegung des Führungselementes 5 zum Gehäuse 6 zur Folge, wie dies durch den Doppelpfeil auf dem Führungselement 5 in Fig. 2 angedeutet ist. Diese Relativbewegung zwischen dem starr mit dem Einstechwerkzeug 4 verbundenen Führungselement 5 und dem Gehäuse 6 wird durch einen Sensor 10 erfaßt. Sobald ein einstellbarer Weg des Führungselements 5 gegenüber dem Gehäuse 6 überschritten wird, spricht der Sensor 10 an und schaltet den Antrieb des Greifkopfes 7 in Absenkrichtung ab.

Auf diese Weise befindet sich das Einstechwerkzeug 4 stets in einer optimalen Ausgangslage, bevor es durch die waagerechte Bewegung des Greifkopfes 7 zwischen Zwischenlage 3 und unterstem Zuschnitt des jeweiligen Zuschnittblockes 2 eingeschoben wird. Durch die starre Anordnung des Einstechwerkzeuges 4 am Führungselement 5 und durch die ausschließlich in senkrechter Richtung mögliche Relativbewegung des Einstechwerkzeuges 4 zum Greifkopf 7 wird in jedem Fall der durch die Form des Einstechwerkzeuges 4 vorgegebene Angreifwinkel der Vorderkante des Einstechwerkzeuges 4 an der Zwischenlage 3 bzw. am untersten Zuschnitt des jeweiligen Zuschnittblockes 2 beibehalten. Die Beibehaltung dieses optimalen Angreifwinkels ist entscheidend dafür, daß keine Beschädigungen an den Zwischenlagen 3 und Zuschnitten auftreten. Da die Zwischenlage 3 durch den oder die Niederhalter 8 im Einstechbereich niedergehalten wird, ist es weitgehend ausgeschlossen, daß ein oder mehrere Zuschnitte auf der Zwischenlage 3 verbleiben, wenn der Zuschnittblock 2 abgehoben wird. Die voranstehend beschriebene Vorrichtung bewirkt somit ein zuverlässiges Entstapeln von blockweise auf Paletten gestapelten Zuschnitten.

### Bezugszeichenliste:

- 1: Palette
- 2: Zuschnittblock
- 3: Zwischenlage
- 4: Einstechwerkzeug
- 5: Führungselement
- 6: Gehäuse
- 7: Greifkopf
- 8: Niederhalter
- 9: Führungsstange
- 10: Sensor

## Patentansprüche

1. Vorrichtung zum Entstapeln von blockweise unter Einfügen von Zwischenlagen (3) auf Paletten (1) gestapelten Zuschnitten (2) aus Papier, Pappe, Karton, Kunststoff oder dergleichen durch einen räumlich gesteuert verfahrbaren Greifkopf (7), an dem ein etwa waagerecht ausgerichtetes Einstechwerkzeug (4) angeordnet ist, das durch eine waagerechte Bewegung des Greifkopfes (7) den jeweils zu entnehmenden Zuschnittblock (2) untergreift, durch eine anschließende Bewegung des Greifkopfes (4) in senkrechter und/oder waagerechter Richtung von der jeweiligen, die gesamte Fläche der Palette (1) überdeckenden Zwischenlage (3) entfernt und einer Weiterverarbeitung zuführt,
**dadurch gekennzeichnet,**
daß am Greifkopf (7) mindestens ein durch die Absenkbewegung des Greifkopfes (7) auf die Zwischenlage (3) absenkbarer Niederhalter (8) angeordnet ist, dessen Druckfläche in der Arbeitsstellung unterhalb der Einstechkante des Einstechwerkzeuges (4) liegt, das gegenüber dem Niederhalter (8) in waagerechter Richtung verschiebbar ist.

2. Vorrichtung nach Anspruch 1, dadurch gekennzeichnet, daß zwei Niederhalter (8) seitlich neben einem zungenförmigen Einstechwerkzeug (4) angeordnet sind.

3. Vorrichtung nach Anspruch 1, dadurch gekennzeichnet, daß ein Niederhalter (8) zwischen den beiden Zinken eines gabelförmigen Einstechwerkzeuges (4) angeordnet ist.

## Claims

1. Apparatus for destacking blanks (2), which are stacked in a blockwise manner on pallets (1), with the interposition of intermediate layers (3), and consist of paper, paperboard, cardboard, plastic or the like, by means of a gripping head (7) which can be displaced in a three-dimensionally controlled manner and on which there is arranged an approximately horizontally aligned insertion tool (4) which, by virtue of a horizontal movement of the gripping head (7), engages beneath the block of blanks (2) which is to be removed in each case, by virtue of a subsequent movement of the gripping head (7) in the vertical and/or horizontal direction, removes said block of blanks from the respective intermediate layer (3), covering over the entire surface of the pallet (1), and feeds it on for further processing, characterized in that arranged on the gripping head (7) is at least one holding-down device (8) which can be lowered onto the intermediate layer (3) by virtue of the lowering movement of the gripping head (7) and of which the pressure-exerting surface, in the operating position, is located beneath the insertion edge of the insertion tool (4), which can be displaced in the horizontal direction with respect to the holding-down device (8).

2. Apparatus according to Claim 1, characterized in that two holding-down devices (8) are arranged laterally next to a tongue-shaped insertion tool (4).

3. Apparatus according to Claim 1, characterized in that one holding-down device (8) is arranged between the two tines of a fork-shaped insertion tool (4).

## Revendications

1. Dispositif pour le désempilage de feuilles (2) en papier, carton, matière plastique ou analogues, empilées en blocs sur des palettes (1) avec des couches intermédiaires intercalées (3), au moyen d'une tête preneuse (7) à déplacement commandé dans l'espace, sur laquelle est monté un outil plongeur (4) qui est orienté sensiblement horizontalement, qui, par un déplacement horizontal de la tête preneuse (7), s'engage sous le bloc de feuilles (2) correspondant à prélever et qui, par un déplacement ultérieur de la tête preneuse (7) dans le sens vertical et/ou horizontal, éloigne ledit bloc de feuilles (2) de la couche intermédiaire correspondante (3) recouvrant toute la surface de la palette (1) et le dirige vers un poste de traitement ultérieur, caractérisé en ce que, sur la tête preneuse (7), est disposé au moins un dispositif d'appui (8) qui peut être descendu sur la couche intermédiaire (3) par le mouvement descendant de la tête preneuse (7) et dont la surface de pression se trouve, en position de travail, en dessous du bord d'attaque de l'outil plongeur (4) qui peut se déplacer dans le sens horizontal par rapport au dispositif d'appui (8).

2. Dispositif selon la revendication 1, caractérisé en ce que deux dispositifs d'appui (8) sont placés de part et d'autre d'un outil plongeur (4) en forme de lame.

3. Dispositif selon la revendication 1, caractérisé en ce qu'un seul dispositif d'appui (8) est prévu entre les deux dents d'un outil plongeur (4) en forme de fourche.
